(19) Europäisches Patentamt
European Patent Office
Office européen des brevets

(11) **EP 3 684 530 B1**

(12) **FASCICULE DE BREVET EUROPEEN**

(45) Date de publication et mention
de la délivrance du brevet:
**21.07.2021  Bulletin 2021/29**

(21) Numéro de dépôt: **18786839.3**

(22) Date de dépôt: **21.09.2018**

(51) Int Cl.:
*B22F 3/105* (2006.01)        *B22F 5/00* (2006.01)
*B22F 5/04* (2006.01)         *C04B 35/56* (2006.01)
*C22C 29/02* (2006.01)        *C22C 29/06* (2006.01)
*C01B 32/921* (2017.01)       *C04B 35/626* (2006.01)
*C04B 35/645* (2006.01)

(86) Numéro de dépôt international:
**PCT/FR2018/052305**

(87) Numéro de publication internationale:
**WO 2019/058065 (28.03.2019 Gazette 2019/13)**

(54) **PIECE DE TURBINE EN ALLIAGE COMPRENANT UNE PHASE MAX**

LEGIERUNGSTURBINENKOMPONENTE MIT EINER MAX. PHASE

ALLOY TURBINE COMPONENT COMPRISING A MAX PHASE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.09.2017  FR 1758760**

(43) Date de publication de la demande:
**29.07.2020  Bulletin 2020/31**

(73) Titulaires:
- **Centre National de la Recherche Scientifique -
  CNRS
  75016 Paris (FR)**
- **Safran
  75015 Paris (FR)**

(72) Inventeurs:
- **SALLOT, Pierre
  77550 Moissy-Cramayel Cedex (FR)**
- **BRUNET, Véronique
  86180 Buxerolles (FR)**
- **CORMIER, Jonathan
  86360 Chasseneuil du Poitou (FR)**
- **DROUELLE, Elodie Marthe Bernadette
  92120 Montrouge (FR)**
- **DUBOIS, Sylvain Pierre
  86170 Avanton (FR)**
- **VILLECHAISE, Patrick
  86580 Vouneuil Sous Biard (FR)**

(74) Mandataire: **Regimbeau
20, rue de Chazelles
75847 Paris Cedex 17 (FR)**

(56) Documents cités:
**FR-A1- 3 032 449     US-A1- 2005 262 965**

- **DONG BOK LEE ET AL: "Corrosion of TiAlCat
  8001100C in Ar0.2% SOgas atmosphere",
  CORROSION SCIENCE, OXFORD, GB, vol. 53, no.
  8, 2 mai 2011 (2011-05-02), pages 2645-2650,
  XP028373775, ISSN: 0010-938X, DOI:
  10.1016/J.CORSCI.2011.05.001 [extrait le
  2011-05-06]**
- **LIU JIAKUN ET AL: "Interfacial microstructure
  and joining properties of TiAl/Ti3AlC2diffusion
  bonded joints using Zr and Ni foils as interlayer",
  VACUUM, PERGAMON PRESS, GB, vol. 102, 7
  novembre 2013 (2013-11-07), pages 16-25,
  XP028548325, ISSN: 0042-207X, DOI:
  10.1016/J.VACUUM.2013.10.024**
- **AI TAOTAO ET AL: "Low-temperature synthesis
  and characterization of Ti2AlC/TiAl in situ
  composites via a reaction Hot-Pressing Process
  in the Ti3AlC2-Ti-Al system", METALS AND
  MATERIALS, KOREAN INSITUTE OF METALS
  AND MATERIALS, KOREA, vol. 21, no. 1, 27
  janvier 2015 (2015-01-27), pages 179-184,
  XP035961016, ISSN: 1598-9623, DOI:
  10.1007/S12540-015-1022-8 [extrait le 2015-01-27]**

**Description**

**DOMAINE DE L'INVENTION**

L'invention concerne une pièce de turbine, telle qu'une aube de turbine ou une ailette de distributeur, utilisée dans l'aéronautique, et plus particulièrement une pièce de turbine comprenant un substrat dont le matériau présente une phase MAX. L'invention concerne également un procédé de fabrication d'une telle pièce de turbine.

**ETAT DE LA TECHNIQUE**

Dans un turboréacteur, les gaz d'échappement générés par la chambre de combustion peuvent atteindre des températures élevées, supérieure à 1200°C, voire 1600°C. Les pièces du turboréacteur, en contact avec ces gaz d'échappement, telles que les aubes de turbine par exemple, doivent ainsi être capables de conserver leurs propriétés mécaniques à ces températures élevées.

A cet effet, il est connu de fabriquer certaines pièces du turboréacteur en « superalliage ». Les superalliages, typiquement à base de nickel, constituent une famille d'alliages métalliques à haute résistance pouvant travailler à des températures relativement proches de leurs points de fusion (typiquement 0,7 à 0,9 fois leurs températures de fusion).

Néanmoins, ces alliages sont très denses, et leur masse limite le rendement des turbines.

A cet effet, l'alliage intermétallique TiAl a été utilisé pour la fabrication de pièces de turbine. Ce matériau est moins dense qu'un superalliage à base nickel, et ses caractéristiques mécaniques permettent d'intégrer des pièces en TiAl dans certaines parties d'une turbine. En effet, les pièces en TiAl peuvent par exemple présenter une résistance à l'oxydation jusqu'à une température d'environ 750°C.

Toutefois, le TiAl ne permet pas actuellement de fabriquer des pièces de turbines ayant une résistance à l'oxydation et des durées de vie suffisantes à des températures supérieures à 800°C, contrairement à certains superalliages base nickel.

A cet effet, des matériaux présentant des phases dites MAX ont été utilisés pour la fabrication de pièces de turbines. Les matériaux présentant une phase MAX sont des matériaux de formule générale $M_{n+1}AX_n$ où n est un entier compris entre 1 et 3, M est un métal de transition (choisi parmi Se, Ti, V, Cr, Zr, Nb, Mo, Hf et Ta), A est un élément du groupe A, c'est-à-dire choisi parmi Al, Si, P, Ga, Ge, As, Cd, In, Sn, Ti et Pb, et X est un élément choisi parmi le carbone et l'azote. La composition de la phase MAX d'un matériau entraîne des propriétés spécifiques du matériau relatives à l'oxydation, sa densité et sa tenue au fluage, en particulier dans la gamme de températures correspondant au fonctionnement de la turbine, par exemple entre 800° C et 1200°C. En particulier, il est connu d'utiliser un matériau présentant une phase $Ti_3AlC_2$ pour la fabrication d'une pièce de turbine. En effet, l'aluminium d'une phase $Ti_3AlC_2$ permet de former une couche protectrice d'alumine, protégeant la pièce de l'oxydation lors du fonctionnement de la turbine. Le carbone d'une phase $Ti_3AlC_2$ permet au matériau de présenter des tenues au fluage optimales dans la gamme de température de fonctionnement de la turbine. Enfin, le titane d'une phase $Ti_3AlC_2$ permet au matériau de présenter une densité basse relativement aux autres matériaux comprenant une phase MAX.

Le document FR3032449 décrit par exemple un matériau destiné à être utilisé dans le domaine aéronautique, présentant une résistance mécanique élevée. Le matériau décrit comprend une première phase MAX de type $Ti_3AlC_2$, et une deuxième phase intermétallique de type $TiAl_3$, la fraction volumique de la phase MAX étant comprise entre 70% et 95% et la fraction volumique de la phase intermétallique étant comprise entre 5% et 30%.

Toutefois, les matériaux décrits dans ce document sont sujets à une oxydation trop élevée, à 1100°C, pour être utilisés pour la fabrication des pièces de turbines dans l'aéronautique.

**RESUME DE L'INVENTION**

Un des buts de l'invention est de proposer une solution pour fabriquer une pièce de turbine en matériau comprenant une phase MAX, présentant à la fois une résistance mécanique spécifique élevée et une résistance à l'oxydation élevée dans la gamme de température de fonctionnement d'une turbine, et moins dense que les matériaux en superalliages base nickel.

Ce but est atteint dans le cadre de la présente invention grâce à une pièce de turbine comprenant un substrat polycristallin, le substrat comprenant des grains et présentant au moins une phase $Ti_3AlC_2$, la fraction massique de ladite phase de l'alliage étant supérieure à 97 %, chaque grain présentant une longueur et une largeur, caractérisée en ce que :

- la longueur moyenne des grains est inférieure à 50 $\mu$m ; et
- le rapport moyen de la largeur sur la longueur des grains est compris entre 0,4 et 0,6 ; et
- le volume moyen de maille de la phase de $Ti_3AlC_2$ est inférieur à 152,4 $Å^3$.

Comme la longueur moyenne des grains est inférieure à 50 $\mu$m et le rapport moyen de la largeur sur la longueur est compris entre 0,4 et 0,6 et que le volume moyen de maille de la phase de $Ti_3AlC_2$ est inférieur à 152,4 $Å^3$, la micromorphologie de la phase de $Ti_3AlC_2$ entraîne une résistance élevée à l'oxydation dans la gamme de température de travail d'une turbine.

L'invention est avantageusement complétée par les caractéristiques suivantes, prises individuellement ou en l'une quelconque de leurs combinaisons techniquement possibles :

- le substrat comprend du carbure de titane, la fraction massique du carbure de titane du substrat étant inférieure à 0,8 % ;
- le substrat comprend de l'alumine, la fraction massique de l'alumine du substrat étant inférieure à 3 % ;
- le substrat comprend des composés intermétalliques $Ti_xAl_y$, la fraction volumique des composés $Ti_xAl_y$ du substrat étant inférieure à 1 % ;
- le substrat présente des phases comprenant du fer et/ou du tungstène, et la somme de la fraction volumique moyenne en fer et en tungstène desdites phases est inférieure à 2% ;
- la densité relative de la phase de $Ti_3AlC_2$ est supérieure à 96 %.

Un autre objet de l'invention est une aube de turbine caractérisée en ce qu'elle comprend une pièce telle que décrite précédemment.

Un autre objet de l'invention est un redresseur de turbine caractérisé en ce qu'il comprend une pièce telle que décrite précédemment.

Un autre objet de l'invention est une turbine caractérisée en ce qu'elle comprend une aube de turbine et/ou un redresseur de turbine tels que décrits précédemment.

Un autre objet de l'invention est un procédé de fabrication d'une pièce de turbine, la pièce comprenant un substrat polycristallin, le substrat comprenant des grains et présentant au moins une phase de $Ti_3AlC_2$, la fraction massique de ladite phase de l'alliage étant supérieure à 97 %, chaque grain présentant une longueur et une largeur, la longueur moyenne des grains étant inférieure à 50 $\mu$m et le rapport moyen de la largeur sur la longueur étant compris entre 0,4 et 0,6, le volume moyen de maille de la phase de $Ti_3AlC_2$ étant inférieur à 152,4 $Å^3$, caractérisé par la mise en oeuvre d'une étape de frittage flash.

L'invention est avantageusement complétée par les caractéristiques suivantes, prises individuellement ou en l'une quelconque de leurs combinaisons techniquement possibles :

- la température lors de l'étape de frittage flash est inférieure à 1400°C ;
- la pression lors de l'étape de frittage flash est supérieure à 60 MPa ;
- l'étape de frittage flash met en oeuvre un traitement thermique à une température maximale pendant moins de dix minutes ;
- l'étape de frittage flash comprend une sous-étape de refroidissement, la vitesse de refroidissement lors de la sous-étape de refroidissement étant inférieure à 100°C par minute ;
- le procédé de fabrication d'une pièce comprend des étapes de :

    a) mélange et homogénéisation de poudres comprenant au moins du titane, de l'aluminium et du carbone ;
    b) frittage réactif des poudres ;
    c) réduction à l'état de poudre du produit du frittage réactif des poudres ;
    les étapes a) à c) étant mises en oeuvre avant l'étape de frittage flash du produit du broyage.

**PRESENTATION DES DESSINS**

D'autres caractéristiques et avantages ressortiront encore de la description qui suit, laquelle est purement illustrative et non limitative, et doit être lue en regard des figures annexées, parmi lesquelles :

- la figure 1 illustre schématiquement une section d'une pièce de turbine, par exemple une aube de turbine ou une ailette de distributeur ;
- la figure 2 est une photographie en microscopie électronique à balayage de la microstructure d'un substrat d'une pièce de turbine ;
- la figure 3 illustre le gain de masse de différents substrats après un traitement entraînant une oxydation isotherme ;
- la figure 4 illustre une maille de phase MAX de type 312 ;
- la figure 5 est un diagramme illustrant l'influence du critère de distorsion du volume de la maille et de la densité relative du substrat sur les variations de la vitesse de fluage secondaire du substrat ;
- la figure 6 illustre le fluage dans une représentation de Larson-Miller pour différents types de substrats ;

- la figure 7 illustre l'évolution du gain de masse pour plusieurs substrats présentant des critères de distorsion du volume de la maille différents lors d'un traitement entraînant une oxydation ;
- la figure 8 illustre l'influence de la fraction massique de carbure de titane sur le gain de masse de substrats traités par oxydation ;
- la figure 9 illustre un procédé de fabrication d'une pièce.

## DEFINITIONS

On désigne par le terme « longueur » $L$ d'un grain la taille maximale du grain, sur une droite passant par le centre d'inertie de ce grain.

On désigne par le terme « largeur » $l$ d'un grain la taille minimale du grain, sur une droite passant par le centre d'inertie de ce grain.

On désigne par « densité » le rapport entre la masse d'un volume donné du substrat et la masse d'un même volume d'eau à 4 degrés et à pression atmosphérique.

On désigne par « densité relative » le rapport entre la densité du substrat et la densité théorique du même substrat.

On désigne par « paramètre de Larson-Miller » le paramètre P donné par la formule (1) :

$$P = T(\ln(t_r + k)) \qquad\qquad (1)$$

où T est la température du substrat en Kelvin, $t_r$ est le temps de rupture du substrat pour une contrainte spécifique et k est une constante.

On désigne par « composé stœchiométrique » ou « matériau stœchiométrique » un matériau constitué d'une pluralité d'éléments, la fraction atomique de chaque élément étant un nombre entier.

## DESCRIPTION DETAILLEE D'UN MODE DE REALISATION DE L'INVENTION

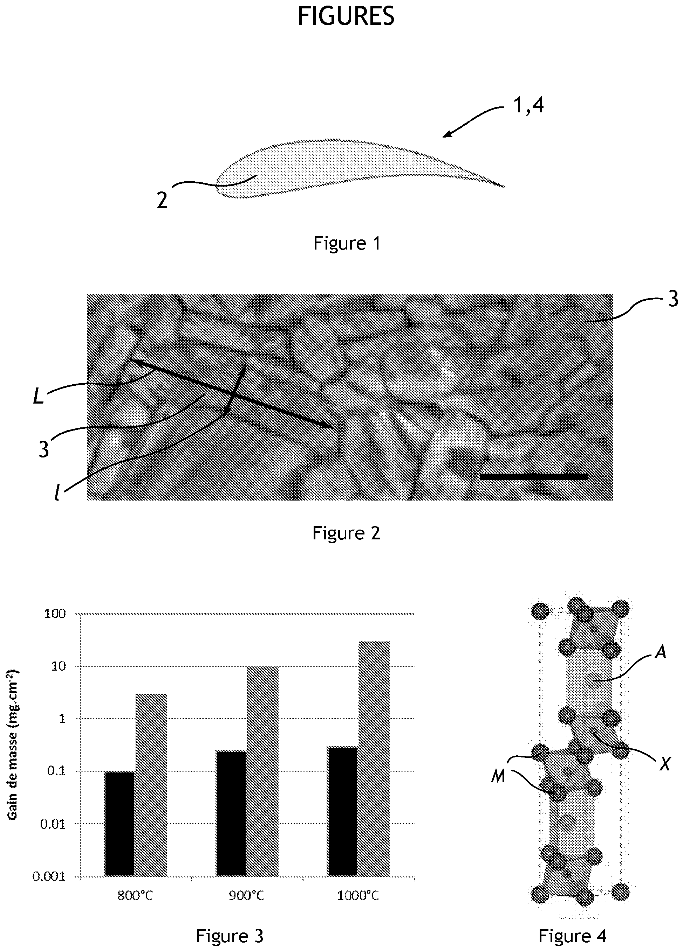

En référence à la figure 1, une pièce 1 de turbine, telle qu'une aube 4 comprend un substrat 2 polycristallin. Ce substrat présente au moins une phase $Ti_3AlC_2$. Les éléments illustrés en figure 1 peuvent être indépendamment représentatifs des éléments d'une aube 4 de turbine, d'une ailette de distributeur, ou de tout autre élément, partie ou pièce d'une turbine.

En référence à la figure 2, le substrat 2 polycristallin comprend des grains 3. Les grains 3 d'un substrat présentent plusieurs paramètres morphologiques. Dans la phase $Ti_3AlC_2$ du substrat 2, la longueur $L$ d'un grain 3 est en moyenne inférieure à 50 µm. De plus, le facteur de forme moyen d'un grain 3, c'est-à-dire le rapport de la largeur du grain 3 sur la longueur du grain 3 $l/L$ moyen, est compris entre 0,4 et 0,6 et préférentiellement entre 0,45 et 0,55. Ainsi, les paramètres microstructuraux, relatifs à la longueur moyenne des grains 3 et au facteur de forme moyen, permettent d'augmenter la résistance du substrat 2 à l'oxydation lors du fonctionnement de la turbine, et permettent d'augmenter sa résistance au fluage. En effet, la petite taille des grains permet d'augmenter la fraction surfacique de joints de grain débouchant à la surface du substrat. Or les joints de grains permettent une diffusion rapide et préférentielle d'éléments de l'alliage, par exemple l'aluminium, entraînant la formation d'une couche d'oxyde. L'aluminium peut diffuser majoritairement afin de former de l'alumine en surface. La couche d'alumine ainsi formée est très stable et protectrice à haute température, permettant de limiter ou d'empêcher le gain de masse du substrat 2.

Le facteur de forme moyen des grains combiné à la taille de grain permet également d'améliorer la tenue au fluage en évitant le glissement aux joints de grains. La barre d'échelle en bas à droite de la photographie correspond à une longueur de 10 µm.

La figure 3 illustre le gain de masse de différents substrats après un traitement entraînant une oxydation isotherme. Deux types de substrats sont oxydés : un premier type de substrat 2, conforme à l'invention, correspondant aux barres noires dans la figure 3, dans lequel la longueur moyenne des grains 3 de la phase $Ti_3AlC_2$ est sensiblement égale à 10 µm, et un deuxième type de substrat, différent de l'invention, correspondant aux barres grises dans la figure 3, dans lequel la longueur moyenne des grains de la phase $Ti_3AlC_2$ est sensiblement égale à 60 µm. Le gain de masse est mesuré après une oxydation isotherme. L'oxydation isotherme est mise en oeuvre à différentes températures (800°C, 900°C et 1000°C), sous air et pendant 30 heures. Pour l'ensemble des températures d'oxydation, les substrats 2 dans lesquels la longueur moyenne des grains 3 est sensiblement égale à 10 µm présentent un gain de masse inférieur de plus d'un ordre de grandeur au gain de masse présenté par les substrats dans lesquels la longueur moyenne des grains est sensiblement égale à 60 µm. Ainsi, un substrat 2 dans lequel la longueur moyenne des grains 3 est inférieure à 50 µm présente une résistance élevée à l'oxydation.

La figure 4 illustre une maille de phase MAX de type 312. De manière générale, une phase MAX (comprenant

4

des éléments M, A et X) présente une structure hexagonale. La maille hexagonale d'une phase MAX est formée d'octaèdres $M_6X$, organisés en couches, entre lesquelles sont intercalées des couches d'éléments A. Le volume théorique de la maille de $Ti_3AlC_2$ est connu, et égal à $V_0 = 153,45$ Å$^3$. Selon un aspect de l'invention, le volume moyen des mailles de la phase $Ti_3AlC_2$ est différent du volume théorique. On désigne par critère de distorsion du volume de la maille le paramètre $\delta$ donné par la formule (2) :

$$\delta = \frac{V_0 - V_{mes}}{V_0} \qquad\qquad (2)$$

où $V_{mes}$ est égal au volume moyen de la maille mesuré pour la phase $Ti_3AlC_2$ du substrat 2. Ce volume peut être calculé après détermination des paramètres de maille par affinement Rietveld des diffractogrammes obtenus par Diffraction des Rayons X (DRX), par exemple mesuré dans un domaine angulaire compris entre 7° et 140°. La variation du paramètre $\delta$ est principalement entraînée par d'éventuelles contaminations par des éléments chimiques lors de la fabrication du substrat 2. Ce paramètre $\delta$ peut également varier avec des paramètres de fabrication du substrat 2 tels que la pression, la température et/ou la durée des traitements du substrat 2 lors de la fabrication.

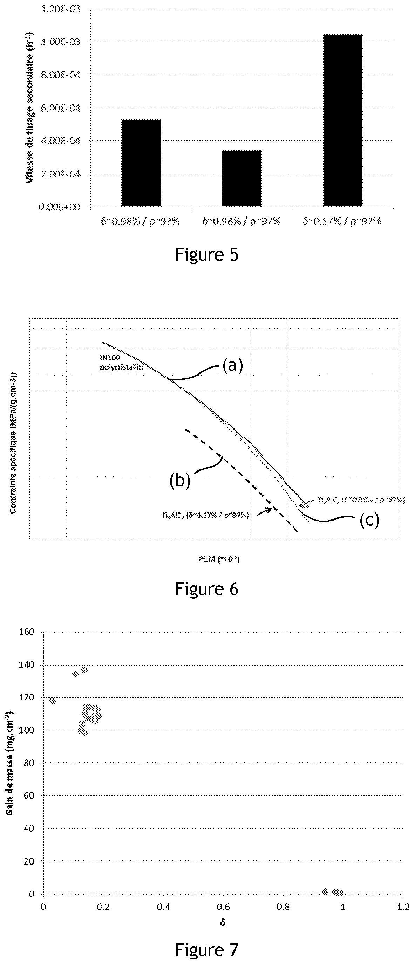

La figure 5 est un diagramme illustrant l'influence du paramètre $\delta$ et de la densité relative du substrat sur les variations de la vitesse de fluage secondaire du substrat 2. La vitesse de fluage secondaire est mesurée sur des substrats 2 traités à une température de 900°C et soumis à une contrainte de traction de 140 MPa. Les substrats 2 utilisés pour les mesures illustrées dans la figure 5 présentent une fraction volumique de la phase $Ti_3AlC_2$ supérieure à 98 % et présentent des densités relatives différentes. Pour une densité relative égale à 97% (correspondant à la colonne du centre et à la colonne de droite de la figure 5), la vitesse de fluage secondaire est illustrée pour deux paramètres $\delta$ ($\delta$ = 0,98 % et $\delta$ = 0,17 %). Le substrat présente une vitesse de fluage secondaire plus élevée pour $\delta$ = 0,17% et plus basse pour $\delta$ = 0,98%. De manière générale, le substrat présente une vitesse de fluage secondaire plus élevée quand $\delta < 0,7$ %. Ainsi, un substrat 2 présentant un paramètre $\delta > 0,7\%$ permet au substrat 2 de mieux résister au fluage. Le paramètre $\delta$ caractérise un écart entre le volume de la maille de la phase MAX réel ou mesuré et le volume de maille théorique ou de référence. Ainsi, quand $\delta$ augmente, le volume de maille de la phase MAX diminue, ce qui traduit un rapprochement entre les différentes couches d'éléments A et les octaèdres $M_6X$. La relation entre le paramètre $\delta$ et la tenue en fluage d'un substrat 2 est inattendue. Il serait peut-être possible d'expliquer cet effet par un ralentissement du mouvement des dislocations, permettant ainsi d'améliorer la tenue au fluage du matériau. Préférentiellement, le paramètre delta est compris entre 0,7 et 2% et préférentiellement entre 0,92 et 1%. En considérant que $V_0 = 153,45$ Å$^3$ pour une phase $Ti_3AlC_2$, le volume moyen d'une maille de la phase $Ti_3AlC_2$ d'un substrat 2 est inférieur à 152,4 Å$^3$. Préférentiellement, le volume moyen de maille de la phase $Ti_3AlC_2$ est compris entre 150,38 Å$^3$ et 152,37 Å$^3$, et préférentiellement compris entre 151,91 Å$^3$ et 152,03 Å$^3$. Les effets du volume de maille décrits précédemment sont préférentiellement constatés lorsque la longueur moyenne des grains est inférieure à 50 $\mu$m et que le rapport moyen de la largeur sur la longueur des grains est compris entre 0,4 et 0,6.

Pour un paramètre $\delta$ égal à 0,98% (correspondant à la colonne de gauche et à la colonne du centre de la figure 5), la vitesse de fluage secondaire est illustrée pour deux densités relatives $\rho$ différentes ($\rho$ = 92%, correspondant à la colonne de gauche et $\rho$=97%, correspondant à la colonne du centre). Ainsi, une densité relative $\rho$ du substrat 2 supérieure à 96% permet de diminuer la vitesse de fluage par rapport à une densité relative du substrat 2 inférieure à 96%. En effet, le volume de matière sollicité au cours du fluage est plus petit lorsque la densité diminue. Pour une contrainte extérieure imposée, les efforts, à l'échelle de la microstructure, augmentent lorsque la densité relative diminue. Ainsi la durée de vie en fluage diminue lorsque la densité diminue.

La figure 6 illustre le fluage dans une représentation de Larson-Miller pour différents types de substrats. La contrainte spécifique est représentée en fonction du paramètre de Larson-Miller. La courbe (a) correspond à un substrat en superalliage base nickel polycristallin connu. La courbe (b) correspond à un substrat comprenant une phase $Ti_3AlC_2$ et présentant un critère de distorsion de la maille $\delta$ égal à 0,17%. La courbe (c) correspond à un substrat 2 conforme à l'invention, comprenant une phase $Ti_3AlC_2$ et présentant un critère de distorsion de la maille $\delta$ égal à 0,98%. La caractéristique du substrat 2, correspondant à la courbe (c), présente une contrainte spécifique similaire à celle du substrat base nickel ; en revanche la caractéristique du substrat correspondant à la courbe (b) présente, pour une valeur du paramètre de Larson-Miller prédéterminée, une contrainte spécifique sensiblement un ordre de grandeur plus basse que la contrainte spécifique d'un substrat 2 correspondant à la courbe c). Ainsi, un substrat 2 mis en œuvre dans une pièce 1 présente une résistance mécanique plus élevée qu'un substrat connu présentant une phase de $Ti_3AlC_2$.

La figure 7 illustre l'évolution du gain de masse pour plusieurs substrats présentant des paramètres $\delta$ différents, lors d'un traitement entraînant une oxydation. L'oxydation est entraînée par un traitement thermique cyclique de chaque substrat entre 100°C et 1000°C, en maintenant la température de 1000°C pendant une heure lors de chaque cycle, pendant 240 cycles. Un gain de masse surfacique compris entre 90 et 140 mg/cm$^2$ est mesuré sur les substrats présentant un paramètre $\delta$ inférieur à 0,7 %. En revanche, les substrats 2 présentant un paramètre $\delta$ supérieur à 0,7 % présentent un gain de masse sensiblement nul. Ainsi, les substrats 2 conformes à l'invention présentent une résistance à l'oxydation, dans les conditions de température correspondant au travail d'une turbine, plus élevée que les substrats connus.

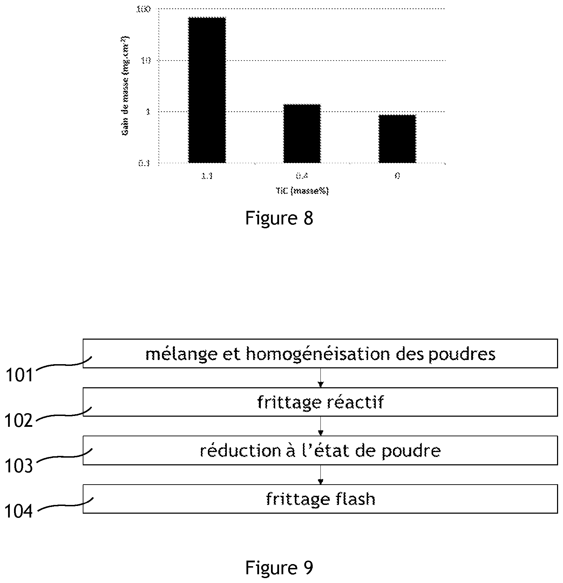

La figure 8 illustre l'influence de la fraction massique de carbure de titane sur le gain en masse de substrats après un traitement entraînant l'oxydation. L'oxydation des substrats est mise en oeuvre en contrôlant cent cycles thermiques, sous air. Chaque cycle correspond au traitement thermique d'un substrat de 100°C à 1000°C, suivant une rampe de température de 5°C/min, suivi d'un traitement du substrat à une température de 1000°C pendant une heure, puis d'un refroidissement de 1000°C à 100°C.

Trois substrats sont traités thermiquement. Chacun des substrats présente une fraction massique en carbure de titane (TiC) différente : 1,1 % (illustré par la colonne de gauche de la figure 8), 0,4 % (illustré par la colonne du milieu de la figure 8) et 0 % (illustré par la colonne de droite de la figure 8). Ainsi, l'oxydation du substrat peut être significativement réduite en diminuant la fraction massique de TiC dans le substrat. Avantageusement, le substrat 2 selon un aspect de l'invention présente une fraction massique en TiC inférieure à 0,8 % de manière à réduire l'oxydation entraînée par les températures de travail d'une turbine.

En référence à la figure 9, un procédé de fabrication d'une pièce 1 peut comprendre les étapes suivantes.

Lors d'une étape 101 du procédé de fabrication de la pièce 1, on mélange des poudres comprenant du titane, de l'aluminium et du carbone, à densifier. Des poudres de $TiC_{>0,95}$, d'aluminium et de titane peuvent par exemple être mélangées dans des proportions en fraction atomique respectives de 1,9 at%/1,05 at%/1 at%. On peut par exemple homogénéiser les poudres en utilisant un mélangeur de type Turbula (marque déposée) ou tout type équivalent de mélangeur en trois dimensions. Préférentiellement, la fraction atomique de poudre d'aluminium mélangée est strictement supérieure à 1, et préférentiellement comprise entre 1,03 et 1,08. En effet, l'évaporation de Al lors du traitement de frittage réactif ultérieur entraîne une diminution de la fraction atomique en aluminium de la pièce obtenue en fin de procédé. Ainsi, une fraction atomique en aluminium comprise entre 1,03 et 1,08 lors de l'étape 101 permet de fabriquer un composé stœchiométrique. Ainsi, selon un aspect de l'invention, le substrat présente des phases comprenant du fer et/ou du tungstène, et la somme de la fraction volumique moyenne en fer et en tungstène desdites phases est inférieure à 2%.

Lors d'une étape 102 du procédé, on met en oeuvre un frittage réactif des poudres mélangées dans l'étape 101. Le frittage réactif peut être mis en œuvre sous une atmosphère protectrice pendant deux heures à 1450°C.

Lors d'une étape 103 du procédé, les produits de l'étape 102 sont réduits à l'état de poudre, par exemple par broyage.

Lors d'une étape 104 du procédé, on met en oeuvre un frittage flash (ou frittage SPS, acronyme anglais de *Spark Plasma Sintering*). Le frittage flash est par exemple mis en oeuvre à une température de 1360°C, pendant deux minutes, à 75 MPa, en contrôlant un refroidissement évoluant à - 50°C.min[1]. La température, lors de l'étape 104 de frittage flash, est avantageusement inférieure à 1400°C. En effet, un frittage flash à une température inférieure à 1400°C permet d'éviter la décomposition de la phase $Ti_3AlC_2$. De plus, un frittage flash à une température inférieure à 1400°C permet d'éviter une interaction et/ou une contamination du produit de l'étape 103 par le matériau formant le moule du dispositif de frittage flash, comprenant par exemple du graphite. La pression lors de l'étape de frittage flash est avantageusement supérieure à 60 MPa. En effet, cette pression, plus élevée que les pressions utilisées lors de la mise en oeuvre de frittage selon des méthodes connues, permet de fabriquer une pièce 1 présentant une densité relative de la phase de $Ti_3AlC_2$ supérieure à 96%, dans laquelle la longueur moyenne des grains 3 est inférieure à 50 $\mu$m et dans laquelle le rapport moyen de la largeur sur la longueur des grains est compris entre 0,4 et 0,6. Avantageusement, l'étape de frittage flash met en œuvre un traitement thermique à une température maximale pendant moins de dix minutes. Ainsi, on évite une croissance excessive et une détérioration des propriétés des grains 3 du substrat 2. L'étape 104 comprend une sous-étape de refroidissement, ultérieure au maintien du substrat 2 à une température maximale. Avantageusement, la norme de la vitesse de refroidissement pendant cette sous-étape est inférieure à 100°C.min[-1]. Ainsi, on évite d'accumuler des contraintes mécaniques résiduelles dans le substrat 2 lors de la sous-étape de refroidissement. Les contraintes résiduelles sont problématiques lors de la fabrication de pièces car elles entraînent des fissurations du matériau, par exemple lors de l'usinage du substrat. Les risques de fissuration lors de l'usinage diminuent ainsi lors de la mise en œuvre d'un procédé de fabrication selon un aspect de l'invention.

La fabrication d'une pièce 1 selon un procédé décrit précédemment, permet au substrat de présenter les propriétés d'un matériau stœchiométrique, et d'éviter ou de limiter l'inclusion de composés dégradant les performances du matériau au regard de l'oxydation ou de la résistance mécanique. Ainsi, selon un aspect de l'invention, la fraction massique de l'alumine du substrat est inférieure à 3%. Selon un autre aspect de l'invention, le substrat comprend des composés intermétalliques $Ti_xAl_y$, la fraction volumique de ces composés étant inférieure à 1%.

## Revendications

**1.** Pièce (1) de turbine comprenant un substrat (2) polycristallin, le substrat (2) comprenant des grains (3) et présentant au moins une phase Ti$_3$AlC$_2$, la fraction massique de ladite phase de l'alliage étant supérieure à 97 %, chaque grain (3) présentant une longueur et une largeur, **caractérisée en ce que** :

- la longueur moyenne des grains (3) est inférieure à 50 μm ; et
- le rapport moyen de la largeur sur la longueur des grains est compris entre 0,4 et 0,6 ; et
- le volume moyen de maille de la phase de Ti$_3$AlC$_2$ est inférieur à 152,4 Å$^3$.

2. Pièce (1) de turbine selon la revendication 1, dans laquelle le substrat (2) comprend du carbure de titane, la fraction massique du carbure de titane du substrat étant inférieure à 0,8%.

3. Pièce (1) de turbine selon la revendication 1 ou 2, dans laquelle le substrat comprend de l'alumine, la fraction massique de l'alumine du substrat étant inférieure à 3%.

4. Pièce (1) de turbine selon l'une des revendications 1 à 3, dans laquelle le substrat (2) comprend un des composés intermétalliques Ti$_x$Al$_y$, la fraction volumique de ces composés Ti$_x$Al$_y$ du substrat étant inférieure à 1%.

5. Pièce (1) de turbine selon l'une des revendications 1 à 4, dans laquelle le substrat présente des phases comprenant du fer et/ou du tungstène, et dans laquelle la somme de la fraction volumique moyenne en fer et en tungstène desdites phases est inférieure à 2%.

6. Pièce (1) de turbine selon l'une des revendications 1 à 5, dans laquelle la densité relative de la phase de Ti$_3$AlC$_2$ est supérieure à 96%.

7. Aube de turbine **caractérisée en ce qu'**elle comprend une pièce (1) selon l'une des revendications 1 à 6.

8. Redresseur de turbine **caractérisé en ce qu'**il comprend une pièce (1) selon l'une des revendications 1 à 6.

9. Turbine **caractérisée en ce qu'**elle comprend une aube de turbine selon la revendication 7 et/ou un redresseur de turbine selon la revendication 8.

10. Procédé de fabrication d'une pièce (1) de turbine, la pièce (1) comprenant un substrat (2) polycristallin, le substrat (2) comprenant des grains (3) et présentant au moins une phase de Ti$_3$AlC$_2$, la fraction massique de ladite phase de l'alliage étant supérieure à 97 %, chaque grain (3) présentant une longueur et une largeur, la longueur moyenne des grains (3) étant inférieure à 50 μm et le rapport moyen de la largeur sur la longueur étant compris entre 0,4 et 0,6, le volume moyen de maille de la phase de Ti$_3$AlC$_2$ étant inférieur à 152,4 Å$^3$, **caractérisé en ce qu'**il comprend une étape de frittage flash.

11. Procédé selon la revendication 10, dans lequel la température lors de l'étape de frittage flash est inférieure à 1400°C.

12. Procédé selon la revendication 10 ou 11, dans lequel la pression lors de l'étape de frittage flash est supérieure à 60 MPa.

13. Procédé selon l'une des revendications 11 à 12, dans lequel l'étape de frittage flash met en oeuvre un traitement thermique à une température maximale pendant moins de dix minutes.

14. Procédé selon l'une des revendications 11 à 13, dans lequel l'étape de frittage flash comprend une sous-étape de refroidissement, lors de laquelle la vitesse de refroidissement est inférieure à 100°C par minute.

15. Procédé selon l'une des revendications 11 à 14, comprenant en outre des étapes de :

a) mélange et homogénéisation de poudres comprenant au moins du titane, de l'aluminium et du carbone ;
b) frittage réactif des poudres ;
c) réduction à l'état de poudre du produit du frittage réactif de l'étape b) ;
les étapes a) à c) étant mises en œuvre avant l'étape de frittage flash du produit du broyage.

**Patentansprüche**

1. Turbinenteil (1), das ein polykristallines Substrat (2) umfasst, wobei das Substrat (2) Körner (3) umfasst und mindestens eine $Ti_3AlC_2$-Phase aufweist, wobei der Massenanteil der Phase der Legierung höher als 97 % ist, wobei jedes Korn (3) eine Länge und eine Breite aufweist, **dadurch gekennzeichnet, dass**:

   - die mittlere Länge der Körner (3) kleiner als 50 $\mu$m ist; und
   - das mittlere Verhältnis der Breite zur Länge der Körner zwischen 0,4 und 0,6 beträgt; und
   - das mittlere Elementarzellenvolumen der $Ti_3AlC_2$-Phase kleiner als 152,4 $Å^3$ ist.

2. Turbinenteil (1) nach Anspruch 1, wobei das Substrat (2) Titancarbid umfasst, wobei der Massenanteil des Titancarbids des Substrats niedriger als 0,8 % ist.

3. Turbinenteil (1) nach Anspruch 1 oder 2, wobei das Substrat Aluminiumoxid umfasst, wobei der Massenanteil des Aluminiumoxids des Substrats niedriger als 3 % ist.

4. Turbinenteil (1) nach einem der Ansprüche 1 bis 3, wobei das Substrat (2) eine der intermetallischen $Ti_xAl_y$-Verbindungen umfasst, wobei der Volumenanteil dieser $Ti_xAl_y$-Verbindungen des Substrats niedriger als 1 % ist.

5. Turbinenteil (1) nach einem der Ansprüche 1 bis 4, wobei das Substrat Phasen aufweist, die Eisen und/oder Wolfram umfassen, und wobei die Summe des mittleren Volumenanteils an Eisen und an Wolfram der Phasen niedriger als 2 % ist.

6. Turbinenteil (1) nach einem der Ansprüche 1 bis 5, wobei die relative Dichte der $Ti_3AlC_2$-Phase höher als 96 % ist.

7. Turbinenschaufel, **dadurch gekennzeichnet, dass** sie ein Teil (1) nach einem der Ansprüche 1 bis 6 umfasst.

8. Turbinenleitrad, **dadurch gekennzeichnet, dass** es ein Teil (1) nach einem der Ansprüche 1 bis 6 umfasst.

9. Turbine, **dadurch gekennzeichnet, dass** sie eine Turbinenschaufel nach Anspruch 7 und/oder ein Turbinenleitrad nach Anspruch 8 umfasst.

10. Verfahren zur Herstellung eines Turbinenteils (1), wobei das Teil (1) ein polykristallines Substrat (2) umfasst, wobei das Substrat (2) Körner (3) umfasst und mindestens eine $Ti_3AlC_2$-Phase aufweist, wobei der Massenanteil der Phase der Legierung höher als 97 % ist, wobei jedes Korn (3) eine Länge und eine Breite aufweist, wobei die mittlere Länge der Körner (3) kleiner als 50 $\mu$m ist und das mittlere Verhältnis der Breite zur Länge zwischen 0,4 und 0,6 beträgt, wobei das mittlere Elementarzellenvolumen der $Ti_3AlC_2$-Phase kleiner als 152,4 $Å^3$ ist, **dadurch gekennzeichnet, dass** es einen Spark-Plasma-Sintering-Schritt umfasst.

11. Verfahren nach Anspruch 10, wobei die Temperatur beim Spark-Plasma-Sintering niedriger als 1400 °C ist.

12. Verfahren nach Anspruch 10 oder 11, wobei der Druck beim Spark-Plasma-Sintering höher als 60 MPa ist.

13. Verfahren nach einem der Ansprüche 11 bis 12, wobei der Spark-Plasma-Sintering-Schritt eine Wärmebehandlung während weniger als zehn Minuten bei einer Höchsttemperatur durchführt.

14. Verfahren nach einem der Ansprüche 11 bis 13, wobei der Spark-Plasma-Sintering-Schritt einen Abkühlungsteilschritt umfasst, bei dem die Abkühlungsgeschwindigkeit niedriger als 100 °C pro Minute ist.

15. Verfahren nach einem der Ansprüche 11 bis 14, das ferner die folgenden Schritte umfasst:

   a) Mischung und Homogenisierung von Pulvern, die mindestens Titan, Aluminium und Kohlenstoff umfassen;
   b) reaktives Sintern der Pulver;
   c) Reduzieren des Produkts des reaktiven Sinterns von Schritt b) in den Pulverzustand;
   wobei die Schritte a) bis c) vor dem Schritt des Spark-Plasma-Sinterns des Produkts der Zerkleinerung durchgeführt werden.

**Claims**

1. A turbine component (1) comprising a polycrystalline substrate (2), the substrate (2) comprising grains (3) and having at least one $Ti_3AlC_2$ phase, the mass fraction of said phase of the alloy being greater than 97%, each grain (3) having a length and a width, **characterized in that**:

   - the average length of the grains (3) is less than 50 $\mu$m; and
   - the average width-to-length ratio of the grains is between 0.4 and 0.6; and
   - the average cell volume of the $Ti_3AlC_2$ phase is less than 152.4 $Å^3$.

2. The turbine component (1) as claimed in claim 1, wherein the substrate (2) comprises titanium carbide, the mass fraction of the titanium carbide of the substrate being less than 0.8%.

3. The turbine component (1) as claimed in claim 1 or 2, wherein the substrate comprises alumina, the mass fraction of the alumina of the substrate being less than 3%.

4. The turbine component (1) as claimed in one of claims 1 to 3, wherein the substrate (2) comprises $Ti_xAl_y$ intermetallic compounds, the volume fraction of the $Ti_xAl_y$ compounds of the substrate being less than 1%.

5. The turbine component (1) as claimed in one of claims 1 to 4, wherein the substrate has phases comprising iron and/or tungsten, and wherein the sum of the average volume fraction of iron and of tungsten of said phases is less than 2%.

6. The turbine component (1) as claimed in one of claims 1 to 5, wherein the relative density of the $Ti_3AlC_2$ phase is greater than 96%.

7. The turbine blade **characterized in that** it comprises a component (1) as claimed in one of claims 1 to 6.

8. The turbine stator **characterized in that** it comprises a component (1) as claimed in one of claims 1 to 6.

9. The turbine **characterized in that** it comprises a turbine blade as claimed in claim 7 and/or a turbine stator as claimed in claim 8.

10. A method for manufacturing a turbine component (1), the component (1) comprising a polycrystalline substrate (2), the substrate (2) comprising grains (3) and having at least one $Ti_3AlC_2$ phase, the mass fraction of said phase of the alloy being greater than 97%, each grain (3) having a length and a width, the average length of the grains (3) being less than 50 $\mu$m and the average width-to-length ratio being between 0.4 and 0.6, the average cell volume of the $Ti_3AlC_2$ phase being less than 152.4 $Å^3$, **characterized in that** it comprises a step of flash sintering.

11. The method as claimed in claim 10, wherein the temperature during the flash sintering step is less than 1400°C.

12. The method as claimed in claim 10 or 11, wherein the pressure during the flash sintering step is greater than 60 MPa.

13. The method as claimed in one of claims 11 to 12, wherein the flash sintering step implements a heat treatment at a maximum temperature during less than ten minutes.

14. The method as claimed in one of claims 11 to 13, wherein the flash sintering step comprises a sub-step of cooling, during which the cooling speed is less than 100°C per minute.

15. The method as claimed in one of claims 11 to 14, further comprising steps of:

   a) mixing and homogenizing of powders containing at least titanium, aluminum and carbon;
   b) reaction sintering of the powders;
   c) reduction to the powder state of the product of the reaction sintering of step b);
   the steps a) to c) being implemented before the step of flash sintering of the product of the milling.

# FIGURES

Figure 1

Figure 2

Figure 3

Figure 4

Figure 5

Figure 6

Figure 7

Figure 8

mélange et homogénéisation des poudres

101

frittage réactif

102

réduction à l'état de poudre

103

frittage flash

104

Figure 9

**EP 3 684 530 B1**

## RÉFÉRENCES CITÉES DANS LA DESCRIPTION

**Documents brevets cités dans la description**

- FR 3032449